# EUROPÄISCHE PATENTSCHRIFT

(11) **EP 2 329 978 B1**
(45) Veröffentlichungstag und Bekanntmachung des Hinweises auf die Patenterteilung: **13.02.2013**
(21) Anmeldenummer: 09014901.4
(22) Anmeldetag: 01.12.2009
(51) Int. Cl.: B60J 7/00

(54) **Schiebedach-Sonnenschutzbaugruppe**
Assembly including a sun-roof and a sun-screen
Dispositif incluant un toit coulissant et un store solaire

(43) Veröffentlichungstag der Anmeldung: 08.06.2011
(73) Patentinhaber: Roof Systems Germany GmbH, 63128 Dietzenbach (DE)
(72) Erfinder: Grimm, Rainer, 60598 Frankfurt (DE); Boehm, Horst, 60599 Frankfurt/Main (DE)
(74) Vertreter: Prinz & Partner

(56) Entgegenhaltungen:
- DE-A1- 4 041 341
- DE-A1-102005 030 973
- DE-U1-202005 020 610

## Beschreibung

Die Erfindung betrifft eine Schiebedach-Sonnenschutzbaugruppe für ein Fahrzeug, gemäß dem Oberbegriff des Anspruchs 1.

Eine durch ein Schiebedach freigebbare oder gegebenenfalls auch eine durch ein Glasdach verschlossene Öffnung in einem Fahrzeugdach ist meist mit einem Sonnenschutzelement versehen, das die Fahrzeuginsassen zum Schutz vor Sonneneinstrahlung so verschieben können, dass es die Öffnung oder das Glasdach innenseitig ganz oder teilweise abdeckt. Ein derartiger Sonnenschutz ist auch deshalb wichtig, weil einfallende Sonnenstrahlung den Fahrer blenden kann. Dabei kann sich auch bereits ein kleiner Spalt zwischen dem vorderen Ende des Sonnenschutzelements und dem Rand der Dachöffnung als störend erweisen, durch den immer noch blendende Sonnenstrahlung einfallen kann. Es ist daher gewünscht, dass das vordere Ende des Sonnenschutzelements in seiner Schließposition den vorderen Teil der Dachöffnung zum Innenraum vollständig abdeckt.

Eine gattungsgemäße Sonnenschutzbaugruppe ist in der DE 20 2005 020 610 U gezeigt.

In den letzten Jahren haben sich zunehmend Sonnenschutzbaugruppen durchgesetzt, bei denen das Sonnenschutzelement durch einen Motor bewegt, also nicht mehr durch Handbetätigung verschoben wird. Toleranzen, die sich in der Baugruppe addieren, können hier dazu führen, dass die Endstellung des vorderen Endes des Sonnenschutzelements innerhalb eines Toleranzwegs variiert. Derartige Toleranzen ergeben sich beispielsweise aus der Bewegung des kraftübertragenden Antriebselements, das das Sonnenschutzelement bewegt und das in der Regel ein zugfestes und drucksteif geführtes Kabel ist. Weitere Toleranzen ergeben sich bei der Verwendung eines Rollos als Sonnenschutzelement beim Auf- und Abwickeln des Rollos oder aber auch durch Rohbautoleranzen.

Um diese Toleranzen zu kompensieren, wurde bisher am vorderen Ende der Dachöffnung eine Verkleidung angebracht, die das vordere Ende des Sonnenschutzelements in seiner Schließposition überdeckt, um sicherzustellen, dass hier kein Spalt frei bleibt. Der Nachteil dieser Lösung ist allerdings, dass die lichte Weite der Dachöffnung reduziert wird und somit sich für die Fahrzeuginsassen der Eindruck einer kleineren Dachöffnung ergibt.

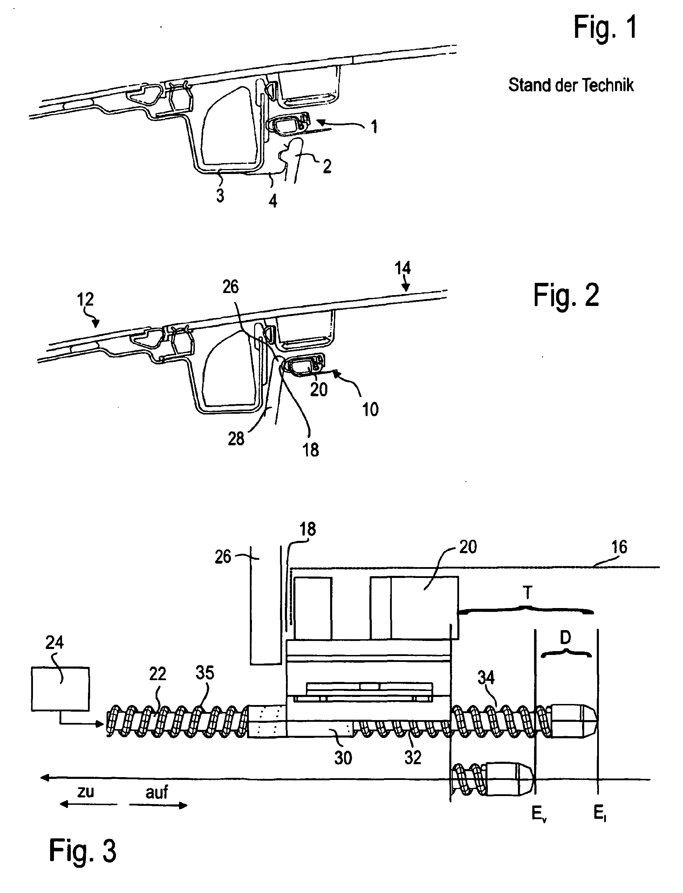

Eine derartige bekannte Lösung ist in Figur 1 gezeigt, wo ein vorderes Ende eines Sonnenschutzelements 1 in seiner Schließposition über ein oberes Ende eines Dachhimmels 2 hinaus verfahren und ein zwischen dem Dachhimmel 2 und dem Dachrahmen 3 bestehender Spalt durch eine Verkleidung 4 abgedeckt ist.

Es ist Aufgabe der Erfindung, eine Schiebedach-Sonnenschutzbaugruppe für ein Fahrzeug zu schaffen, bei dem im Wesentlichen die ganze lichte Weite der Dachöffnung im geöffneten Zustand des Sonnenschutzelements offen liegt.

Erfindungsgemäß wird das folgendermaßen realisiert: Eine Schiebedach-Sonnenschutzbaugruppe für ein Fahrzeug hat ein Sonnenschutzelement, das in eine Öffnungs- und eine Schließrichtung verschiebbar ist, das im Bereich seines freien, vorderen Endes einen Spriegel aufweist und bei dem wenigstens ein kraftübertragendes Antriebselement vorgesehen ist, das mit dem Spriegel und mit einem Antrieb verbunden ist, um das Sonnenschutzelement in eine geschlossene Stellung zu verschieben. Das vordere Ende des Sonnenschutzelements nimmt in der geschlossenen Stellung eine vorbestimmte Schließposition ein. Es ist wenigstens ein elastisches Zwischenelement vorgesehen, das im Kraftfluss zwischen dem Antrieb und dem vorderen Ende des Sonnenschutzelements angeordnet ist. Dabei ist der Antrieb so ausgelegt, dass er, nachdem das vordere Ende des Sonnenschutzelements die Schließposition erreicht hat, das Antriebselement in eine vorbestimmte Endstellung weiterbewegt, in der das Zwischenelement elastisch deformiert ist.

Es ist erfindungsgemäß eine elastische Kopplung zwischen dem vorderen Ende des Sonnenschutzelements und dem Antriebselement vorgesehen, die es erlaubt, die Toleranzen im Verschiebeweg des Sonnenschutzelements dadurch auszugleichen, dass das Antriebselement nach Erreichen einer Endstellung bis in eine Position weiterbewegt wird, in der sichergestellt ist, dass unter Berücksichtigung aller Toleranzen das Sonnenschutzelement seine Schließposition erreicht hat. Die Endstellung des Antriebselements ist die Position, bei der ohne Ungenauigkeiten des Systems das Sonnenschutzelement die Schließposition gerade erreicht hat. Das Sonnenschutzelement verharrt in seiner Schließposition, sobald es diese erreicht hat. Die weitere Bewegung des Antriebselements wird allein vom elastischen Zwischenelement aufgenommen. Auf diese Weise lässt sich ein Toleranzweg im Bereich von etwa 10 mm ohne Probleme ausgleichen.

Da sichergestellt ist, dass bei jedem Schließen des Sonnenschutzelements dessen vorderes Ende exakt in der Schließposition endet, braucht die lichte Weite der Dachöffnung nicht künstlich durch eine Verkleidung verkleinert zu werden, um zu vermeiden, dass ein Spalt zwischen dem vorderen Ende des Sonnenschutzelements und dem Rand der Dachöffnung bestehen bleiben könnte.

Vorzugsweise ist das Zwischenelement, wenn sich das Sonnenschutzelement in einer geöffneten Stellung befindet, entspannter als in der Schließposition, sodass der gesamte Kompressionsweg des Zwischenelements, der natürlich vorzugsweise dem maximal benötigten Toleranzweg entspricht, zum Ausgleich von Toleranzen im Antriebsweg genutzt werden kann.

Das Zwischenelement ist bevorzugt als Druckfeder ausgebildet, kann aber auch in Form einer Zugfeder realisiert sein.

Die Schließposition kann vorteilhaft mit einer Position zusammenfallen, in der das vordere Ende des Sonnenschutzelements an einem Abschnitt eines Dachhimmels des Fahrzeugs anliegt. Auf diese Weise ist die Dachöffnung auf jeden Fall durch Sonnenschutzelement und Dachhimmel verschlossen. Der Dachhimmel kann einen Anschlag für das vordere Ende des Sonnenschutzelements bilden.

Dabei ist vorzugsweise eine vom Antrieb auf das Antriebselement aufgebrachte Kraft größer als die Federkraft des Zwischenelements. Wird das vordere Ende des Sonnenschutzelements durch einen Anschlag zurückgehalten, beispielsweise durch die Anlage an einem Abschnitt des Dachhimmels, kann eine weitere Vorwärtsbewegung des Antriebselements in eine Kompression des Zwischenelements umgesetzt werden, ohne dass eine weitere Bewegung des vorderen Endes des Sonnenschutzelements erfolgt.

In einer bevorzugten Ausführungsform der Erfindung ist das Antriebselement ein zugfestes und drucksteif geführtes Kabel. Natürlich könnte das Antriebselement auch auf andere Weise, etwa in ein Rollo integriert, ausgeführt sein (z.B. ein selbstaufrollendes Federstahlband am Rand des Rollos).

Als Sonnenschutzelement kommt beispielsweise ein flexibles Rollo oder auch ein starres Sonnenpaneel infrage. Das Prinzip der Erfindung ist in beiden Fällen gleichermaßen gut umzusetzen.

In einer ersten bevorzugten Ausführungsform der Erfindung ist der Spriegel relativ zum Antriebselement verschiebbar angeordnet. Befindet sich das Sonnenschutzelement in seiner geschlossenen Stellung und dessen vorderes Ende in der Schließposition, so wird ein weiteres Verfahren des Antriebselements durch den Antrieb nur in eine Bewegung des Antriebselements umgesetzt, während der Spriegel an seiner Position verharrt. In diesem Fall kann der Spriegel fest mit dem Sonnenschutzelement verbunden sein.

Das Zwischenelement kann beispielsweise zwischen einem antriebselementfesten Anschlag und dem Spriegel angeordnet sein, wobei maximal eine Verschiebung um den festgelegten Toleranzweg zwischen Antriebselement und Spriegel zugelassen ist. Der Anschlag ist z.B. an einem freien Ende des Antriebselements ausgebildet. Die Relativverschiebung wird durch Kompression des Zwischenelements aufgenommen.

Wenn sich das Sonnenschutzelement aus seiner geschlossenen wieder in eine geöffnete Stellung bewegt, entspannt sich das Zwischenelement wieder und stellt den Spriegel beispielsweise automatisch in seine Ausgangslage zurück.

Das Zwischenelement kann beispielsweise eine Spiralfeder sein, die das Antriebselement umgreift.

Der Spriegel ist dabei vorzugsweise fest am Zwischenelement befestigt, sodass sich das Antriebselement gegen den Widerstand des Zwischenelements relativ zum Spriegel bewegen kann. Zwischen dem Spriegel und dem Antriebselement ist vorteilhaft nur eine lineare Bewegung in Verschieberichtung, aber keine Bewegung senkrecht zu dieser Richtung möglich, damit eine exakte Positionierung des Antriebselements, des Spriegels und des vorderen Endes des Sonnenschutzelements möglich ist.

Nach einer zweiten vorteilhaften Ausführungsform der Erfindung ist das wenigstens eine elastische Zwischenelement zwischen dem vorderen Ende des Sonnenschutzelements und dem Spriegel angeordnet. In diesem Fall bewegt sich bei einer Komprimierung des Zwischenelements also das vordere Ende des Sonnenschutzelements relativ zum Spriegel. Der Spriegel kann in diesem Ausführungsbeispiel fest mit dem Antriebselement verbunden sein, während das vordere Ende des Sonnenschutzelements relativ zum Spriegel und relativ zum Körper des Sonnenschutzelements um den Toleranzweg beweglich angeordnet sein sollte.

Hierbei ist für eine präzise Positionierung vorteilhaft, wenn das vordere Ende des Sonnenschutzelements, das Zwischenelement und der Spriegel im Wesentlichen linear aufeinanderfolgend angeordnet sind. Auf diese Weise kann eine über das Antriebselement übertragene Kraft ohne Kraftkomponenten senkrecht zur Verschieberichtung in das Zwischenelement eingeleitet werden.

Das Sonnenschutzelement kann dabei ein im Wesentlichen starres Abschlusselement am vorderen Ende aufweisen, das sich bevorzugt über die gesamte Breite des Sonnenschutzelements erstreckt. Das oder die elastischen Zwischenelemente sind vorteilhaft so angeordnet, dass eine über die Breite gleichmäßige Kraftbeaufschlagung des Abschlusselements gegeben ist. Hierbei können beispielsweise mehrere Spiralfedern als Zwischenelemente nebeneinander angeordnet sein.

Vorzugsweise ist im Abschlusselement wenigstens ein erstes Führungsteil und im Spriegel wenigstens ein damit zusammenwirkendes zweites Führungsteil ausgebildet, wobei die Führungsteile gegeneinander verschiebbar sind. Beispielsweise können Ausnehmungen wie Schlitze oder Bohrungen im Spriegel und Stege im Abschlusselement (oder umgekehrt) vorgesehen sein. Hierbei ist es vorteilhaft, wenn die Zwischenelemente in Form von Spiralfedern an einem Abschnitt der Stege aufgenommen sind, da die Zwischenelemente auf diese Weise gleich fest gehalten und nur in linearer Richtung verformbar angeordnet sind.

Die Erfindung betrifft auch ein Verfahren zum Verschieben eines Sonnenschutzelements einer Schiebedach-Sonnenschutzbaugruppe für ein Fahrzeug, wobei dieses Verfahren insbesondere für eine der oben beschriebenen Schiebedach-Sonnenschutzbaugruppen geeignet ist.

Dabei liegt ein freies vorderes Ende des Sonnenschutzelements in einer Schließposition an einem Anschlag an, und ein Antriebselement wird zum Verfahren des Sonnenschutzelements in die geschlossene Stellung durch einen Antrieb in eine vorbestimmte Endstellung bewegt. Die vorbestimmte Endstellung entspricht einer Position, in der ein im Kraftfluss zwischen dem vorderen Ende des Sonnenschutzelements und dem Antriebselement angeordnetes elastisches Zwischenelement um einen Betrag innerhalb eines vorbestimmten Toleranzwegs komprimiert ist.

Das Antriebselement wird demnach weiter bewegt als es zum Erreichen der Schließposition des freien vorderen Endes des Sonnenschutzelements eigentlich erforderlich wäre. Der zusätzliche Bewegungsweg wird jedoch nicht in eine Bewegung des vorderen Endes des Sonnenschutzelements, sondern in eine Komprimierung des elastischen Zwischenelements umgesetzt.

Die vorbestimmte Endstellung des Antriebselements kann dabei vorteilhaft durch den Antrieb vorgegeben werden. Sie kann beispielsweise einer vorher festgelegten Anzahl von Umdrehungen eines Elektromotors entsprechen. Die vorbestimmte Endstellung sollte dabei so gewählt sein, dass in jedem Fall eine Komprimierung des Zwischenelements auftritt.

Wird das Sonnenschutzelement wieder in seine geöffnete Stellung zurückverfahren, entspannt sich das Zwischenelement, und der Spriegel oder das Abschlusselement des Sonnenschutzelements werden bevorzugt aufgrund der durch das Zwischenelement gelieferten Rückstellkraft wieder in ihre Ausgangsstellung zurückbewegt.

Weitere Merkmale und Vorteile der Erfindung ergeben sich aus der nachfolgenden Beschreibung zweier Ausführungsbeispiele in Verbindung mit den beigefügten Zeichnungen. In diesen zeigen:
- Figur 1 eine schematische Schnittansicht einer Schiebedach-Sonnenschutzbaugruppe gemäß dem Stand der Technik;
- Figur 2 eine schematische Schnittansicht einer erfindungsgemäßen Schiebedach-Sonnenschutzbaugruppe;
- Figur 3 einen Ausschnitt aus einer erfindungsgemäßen Schiebedach-Sonnenschutzbaugruppe gemäß einer ersten Ausführungsform;
- Figur 4 eine schematische Schnittansicht eines Ausschnitts einer erfindungsgemäßen Schiebedach-Sonnenschutzbaugruppe gemäß einer zweiten Ausführungsform;
- Figur 5 die Baugruppe aus Figur 4 in einer Draufsicht; und
- Figur 6 eine Variante der in Figur 4 gezeigten Baugruppe in einer schematischen Schnittansicht.

In Figur 2 ist eine Schiebedach-Sonnenschutzbaugruppe 10 eingebaut in einem nicht näher dargestellten Fahrzeugdach 12 dargestellt. Im Fahrzeugdach 12 ist eine Dachöffnung 14 ausgebildet, die von einem nicht gezeigten Schiebedach freigegeben oder verschlossen werden kann. Unterhalb der Dachöffnung 14 ist ein Sonnenschutzelement 16 angeordnet (in Figur 2 angedeutet), das die Dachöffnung 14 überdecken kann. Im Bereich seines vorderen freien Endes 18 weist das Sonnenschutzelement 16 einen quer zur Fahrzeuglängsachse verlaufenden, sich längs des gesamten Sonnenschutzelements 16 erstreckenden Spriegel 20 auf, der mit einem hier nicht dargestellten Antriebselement 22 (siehe Figuren 3, 4 und 6) verbunden ist, das die Kraft eines Antriebs 24, beispielsweise in Form eines Elektromotors, auf das Sonnenschutzelement 16 überträgt. Durch die Bewegung des Antriebs 24 kann das Sonnenschutzelement 16 aus einer geöffneten Stellung, in der die Dachöffnung 14 freigegeben ist, in eine geschlossene Stellung, wie sie in Figur 2 dargestellt ist, verfahren werden.

In der in Figur 2 gezeigten geschlossenen Stellung liegt das vordere Ende 18 des Sonnenschutzelements 16 in seiner Schließposition an einem Anschlag 26 an, der in diesem Fall durch einen Abschnitt des oberen Endes eines Dachhimmels 28 gebildet ist.

Verglichen mit dem Stand der Technik, der in Figur 1 gezeigt ist, ist hier ersichtlich, dass der Dachhimmel 28 ein gutes Stück weiter zum vorderen Ende der Dachöffnung 14 (in den Figuren 1 und 2 nach links) hin angeordnet werden kann. In der Folge erhöht sich durch die Erfindung die lichte Weite der Dachöffnung 14 gegenüber der aus dem Stand der Technik bekannten Baugruppe.

Beim Verfahren in die geschlossene Stellung fährt das Sonnenschutzelement an den Dachhimmel 28 heran, bis in der Schließposition das vordere Ende 18 des Sonnenschutzelements 16 in direktem Kontakt mit einem Abschnitt des Dachhimmels 28 ist. An dieser Stelle könnte natürlich auch ein anderer Anschlag an einem anderen fahrzeugfesten Bauteil als dem Dachhimmel 28 vorgesehen sein.

Das Sonnenschutzelement 16 kann ein Rollo sein, das an seinem anderen, nicht gezeigten Ende gefaltet oder gewickelt aufgenommen ist, es kann aber auch ein starres Bauteil sein, das unter die Dachhaut verschoben wird.

Bei der in Figur 3 gezeigten ersten Ausführungsform ist der Spriegel 20 im Bereich des vorderen Endes 18 des Sonnenschutzelements 16 (das hier nur angedeutet ist) so mit dem Antriebselement 22 verbunden, dass er gegenüber diesem linear verschieblich gelagert ist. Das Antriebselement 22 ist in diesem Fall ein zugfestes und drucksteif geführtes Kabel.

Der Spriegel 20 hat einen Befestigungsabschnitt 30, der das Antriebselement 22 umgreift und der an einem als Spiralfeder ausgebildeten elastischen Zwischenelement 32 befestigt ist. Das elastische Zwischenelement 32 wiederum erstreckt sich zwischen dem Befestigungsabschnitt 30 am Spriegel 20 und einem antriebselementfesten Anschlag 34, an dem es ebenfalls befestigt ist. Gegen die Federkraft des elastischen Zwischenelements 32 kann der Spriegel 20 entlang des Antriebselements 22 bewegt werden, insbesondere in Richtung zum Anschlag 34, also in der Figur 3 nach rechts.

Der Spriegel 20 und das Sonnenschutzelement 16 sind hier starr miteinander verbunden.

Das Antriebselement 22 verläuft vorzugsweise in einer nicht gezeigten Führungsschiene. Normalerweise ist an beiden Seiten des Sonnenschutzelements 16 je ein Antriebselement 22 in einer Führungsschiene vorgesehen. Diese Konstruktion kann auch hier verwendet werden.

Bei einer Bewegung des Sonnenschutzelements 16 in Schließrichtung hin zur geschlossenen Stellung (nach links in Figur 3) übt der Antrieb 24 Zug auf das Antriebselement 22 und darüber auf den Spriegel 20 und das Sonnenschutzelement 16 aus.

Die Federkraft des elastischen Zwischenelements 32 ist so gewählt, dass sie größer ist als die Kraft, die benötigt wird, um das Sonnenschutzelement 16 aus seiner geöffneten in die geschlossene Stellung zu bewegen. Bei dieser Verfahrbewegung wird also das Sonnenschutzelement 16 so bewegt, als wäre der Spriegel 20 starr mit dem Antriebselement 22 verbunden.

Im Verlauf der Schließbewegung gelangt das vordere Ende 18 des Sonnenschutzelements 16 in Anlage an den Anschlag 26, der hier durch einen Abschnitt des Dachhimmels 28 gebildet ist. Damit hat das vordere Ende 18 seine Schließposition erreicht, und das Antriebselement 22 seine ideale Endstellung Eᵢ. Der Antrieb 24 ist jedoch so eingestellt, dass die Bewegung des Antriebselements 22 in Schließrichtung über diese ideale Endstellung Eᵢ fortgesetzt wird. Der Antrieb bewegt das Antriebselement 22 weiter in Schließrichtung, bis es eine vorbestimmte Endstellung Eᵥ erreicht hat.

Die beiden Endstellungen Eᵢ, Eᵥ sind in der Figur 3 schematisch am hinteren freien Ende des Antriebselements 22 dargestellt.

Das Voreinstellen der vorbestimmten Endstellung Eᵥ geschieht beispielsweise dadurch, dass die Anzahl der Umdrehungen eines Elektromotors, der den Antrieb 24 bildet, vorgegeben wird. Abhängig von den Toleranzen der Positionen des Sonnenschutzelements 16 und des Antriebselements 22 oder auch von der Genauigkeit der Wicklung des aufgewickelten Teils eines Rollos variiert die vorgegebene Endstellung Eᵥ innerhalb eines Toleranzbereichs T, der in etwa 10 mm beträgt.

Das Zwischenelement 32 ist so ausgelegt, dass es durch seine Komprimierung diesen Toleranzbereich T vollständig ausgleichen kann. Konkret wird natürlich immer nur die aktuelle Differenz D zwischen der voreingestellten Endstellung Eᵥ und der idealen Endstellung Eᵢ ausgeglichen.

Die Komprimierung des elastischen Zwischenelements 32 erfolgt dadurch, dass das Sonnenschutzelement 16 an seinem vorderen Ende 18 am Anschlag 26 zurückgehalten wird, wodurch auch der Spriegel 20 in dieser Position festgehalten wird. Da der Spriegel 20 gegenüber dem Antriebselement 22 beweglich ist, verfährt das Antriebselement 22 relativ zum Spriegel 20 nach links (in Figur 3). Dabei wird das elastische Zwischenelement 32 komprimiert. Diese Bewegung erfolgt so lange, bis das Antriebselement 22 die vorbestimmte Endstellung Eᵥ eingenommen hat.

Da stets ein Überfahren der idealen Endstellung Eᵢ erfolgt, ist immer sichergestellt, dass das vordere Ende 18 des Sonnenschutzelements 16 tatsächlich in Anlage an den Anschlag 26 gelangt und somit die Dachöffnung 14 spaltfrei verschlossen wird.

Wenn das Sonnenschutzelement 16 wieder in seine geöffnete Stellung verfahren wird, um die Dachöffnung 14 freizugeben, bewegt der Antrieb 24 das Antriebselement 22 in die entgegengesetzte Richtung (nach rechts in Figur 3). Zunächst entspannt sich das elastische Zwischenelement 32, sodass der Spriegel 20 in seiner Ausgangsposition zurückgestellt wird, anschließend verfährt die gesamte Gruppe aus Antriebselement 22, Zwischenelement 32, Spriegel 20 und Sonnenschutzelement 16 gemeinsam ohne Relativbewegung weiter in Öffnungsrichtung.

Optional kann ein zweites elastisches Zwischenelement 35 vorgesehen sein, welches zwischen Spriegel 20 und einem vorderen Anschlag angeordnet ist, welcher am Antriebselement 22 befestigt ist. Im dargestellten Beispiel wird das Zwischenelement 35 (hier ebenfalls eine Spiralfeder) am Ende der Öffnungsbewegung komprimiert, wenn der Spriegel 20 gegen einen Anschlag gefahren ist. Auch bei der Öffnungsbewegung wird also ein Toleranzausgleich durch ein Weiterbewegen des Antriebselements 22 erreicht.

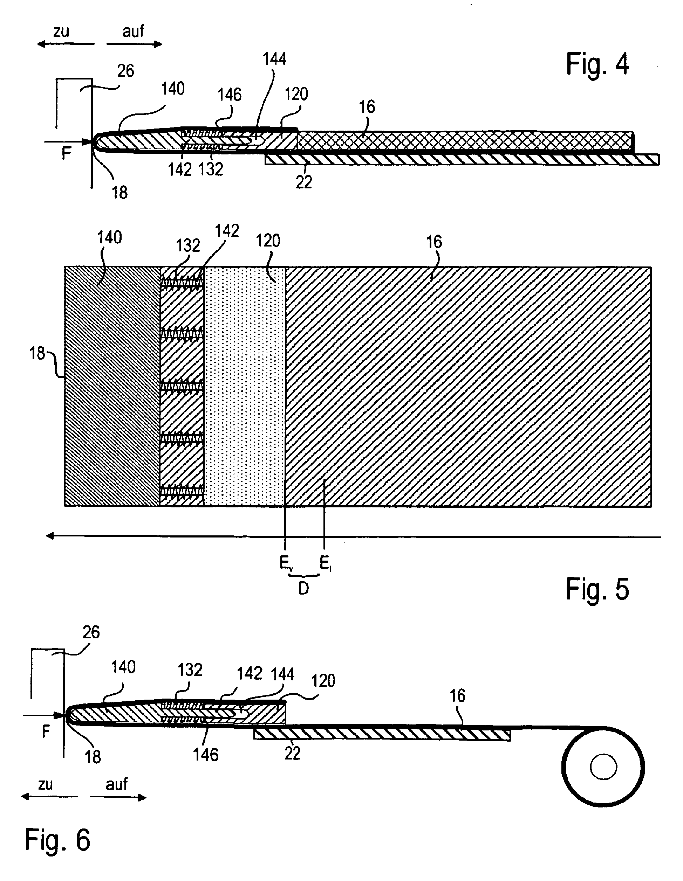

Die Figuren 4 bis 7 zeigen eine zweite Ausführungsform, bei der das elastische Zwischenelement 132 zwischen dem vorderen Ende 18 des Sonnenschutzelements 16 und dem Spriegel 120 angeordnet ist.

Das Sonnenschutzelement 16 weist an seinem vorderen Ende 18 ein Abschlusselement 140 auf, das als starres Bauteil ausgebildet ist, das sich über die gesamte Breite des Sonnenschutzelements 16 erstreckt. Das Abschlusselement 140 und der Spriegel 120 sind gegeneinander verschiebbar ausgebildet. Das Antriebselement 22 ist in diesem Fall fest mit dem Spriegel 120 verbunden, sodass dieser weder gegenüber dem Körper des Sonnenschutzelements 16 noch dem Antriebselement 22 beweglich ist.

Es sind mehrere elastische Zwischenelemente 132 vorgesehen, in diesem Fall fünf, die nebeneinander über die Breite des Sonnenschutzelements 16 gleichmäßig verteilt angeordnet sind, wie Figur 5 zeigt. Die Zwischenelemente 132 sind alle zwischen dem Abschlusselement 140 und dem Spriegel 120 angeordnet.

Das Abschlusselement 140 und der Spriegel 120 sind durch erste und zweite Führungsteile 142, 144 miteinander so verbunden, dass sie geführt linear gegeneinander verschieblich sind. Die ersten Führungsteile 142 sind hier durch Stege gebildet, einer für jedes elastische Zwischenelement 132, die einstückig mit dem Abschlusselement 140 ausgebildet sind und die in Verschieberichtung von diesem abstehen. Um jeden der Stege ist eines der Zwischenelemente 132 angeordnet, die hier als Spiralfeder ausgebildet sind.

Im Spriegel 120 sind als zweite Führungsteile 144 jeweils entsprechende Ausnehmungen ausgebildet, in die die Stege hineinragen. Auf diese Weise sind der Spriegel 120 und das Abschlusselement 140 relativ zueinander verschiebbar, aber in ihrer Bewegung geführt miteinander verbunden.

Am vorderen Ende jeder der Ausnehmungen im Spriegel 120 ist ein Anschlag 146 ausgebildet, an dem ein Ende des elastischen Zwischenelements 132 anliegt.

Bei einer Relativbewegung von Abschlusselement 140 und Spriegel 120 aufeinander zu wird das elastische Zwischenelement 132 komprimiert. Wenn die Krafteinwirkung nachlässt, entspannt sich das Zwischenelement 132 und drückt Spriegel 120 und Abschlusselement 140 wieder auseinander bis in die ursprüngliche Ausgangslage, in der das Zwischenelement 132 entspannt ist.

Es wäre natürlich auch möglich, mehr oder weniger elastische Zwischenelemente 132 vorzusehen oder die Anordnung von Stegen und Ausnehmungen umgekehrt zu verwirklichen.

Zum Schließen wird das Sonnenschutzelement 16 durch den hier nicht gezeigten Antrieb 24 nach links in den Figuren 4 und 6 bewegt, bis das vordere Ende 18 in Anlage an den Anschlag 26 gelangt. Damit hat das Sonnenschutzelement 16 seine Schließposition erreicht. Der Antrieb 24 bewegt das Antriebselement 22 jedoch in Schließrichtung weiter. Damit wird auch der Spriegel 120, der fest mit dem Antriebselement 22 verbunden ist, in Schließrichtung weiter nach links bewegt. Die vom Antrieb 24 aufgebrachte Kraft wird jetzt von den Zwischenelementen 132 aufgenommen, die komprimiert werden, sodass eine Relativbewegung zwischen Spriegel 120 und Abschlusselement 140 erfolgt, wobei sich das Abschlusselement 140 nicht bewegt. Die Bewegung endet, wenn das Antriebselement 22 seine vorbestimmte Endstellung Eᵥ (siehe Figur 5) erreicht hat.

Bei der Bewegung in die entgegengesetzte Richtung zum Öffnen des Sonnenschutzelements 16 bewegt der Antrieb 24 das Antriebselement 22 in die entgegengesetzte Richtung, in den Figuren 4 bis 6 nach rechts. Dabei entspannen sich zunächst die elastischen Zwischenelemente 132, sodass Spriegel 120 und Abschlusselement 140 wieder ihre Ausgangsposition relativ zueinander annehmen, und anschließend wird das Sonnenschutzelement 16 in seine geöffnete Stellung verfahren.

Figur 4 zeigt dabei die Erfindung für ein starres Sonnenschutzelement 16, beispielsweise in Form eines Sonnendaches, während Figur 6 die Umsetzung für ein flexibles Rollo zeigt, das an seinem zweiten Ende in einem Rollowickel angeordnet ist.

## Patentansprüche

1. Schiebedach-Sonnenschutzbaugruppe für ein Fahrzeug, mit
einem Sonnenschutzelement (16), das in eine Öffnungs- und eine Schließrichtung verschiebbar ist und das im Bereich seines freien, vorderen Endes (18) einen Spriegel (20; 120) aufweist,
wenigstens einem kraftübertragenden Antriebselement (22), das mit dem Spriegel (20; 120) und mit einem Antrieb (24) verbunden ist, um das Sonnenschutzelement (16) in eine geschlossene Stellung zu verschieben, wobei das vordere Ende (18) des Sonnenschutzelements (16) in der geschlossenen Stellung eine vorbestimmte Schließposition einnimmt, **dadurch gekennzeichnet, dass**
wenigstens ein elastischen Zwischenelement (32; 132) vorgesehen ist, das im Kraftfluss zwischen dem Antrieb (24) und dem vorderen Ende (18) des Sonnenschutzelements (16) angeordnet ist,
und dass der Antrieb (24) so ausgelegt ist, dass er, nachdem das vordere Ende (18) des Sonnenschutzelements (16) die Schließposition erreicht hat, das Antriebselement (22) in eine vorbestimmte Endstellung (Eᵥ) weiterbewegt, in der das Zwischenelement (32; 132) elastisch deformiert ist.

2. Schiebedach-Sonnenschutzbaugruppe nach Anspruch 1, **dadurch gekennzeichnet, dass** das Zwischenelement (32; 132), wenn sich das Sonnenschutzelement (16) in einer geöffneten Stellung befindet, weniger gespannt ist als in der Schließposition.

3. Schiebedach-Sonnenschutzbaugruppe nach einem der vorhergehenden Ansprüche, **dadurch gekennzeichnet, dass** eine vom Antrieb (24) auf das Antriebselement (22) aufgebrachte Kraft größer ist als die Federkraft des Zwischenelements (32; 132).

4. Schiebedach-Sonnenschutzbaugruppe nach einem der vorhergehenden Ansprüche, **dadurch gekennzeichnet, dass** das Antriebselement (22) ein zugfestes und drucksteif geführtes Kabel ist.

5. Schiebedach-Sonnenschutzbaugruppe nach einem der vorhergehenden Ansprüche, **dadurch gekennzeichnet, dass** das Sonnenschutzelement (16) ein flexibles Rollo oder ein starres Sonnenpaneel ist.

6. Schiebedach-Sonnenschutzbaugruppe nach einem der vorhergehenden Ansprüche, **dadurch gekennzeichnet, dass** der Spriegel (20) relativ zum Antriebselement verschiebbar angeordnet ist.

7. Schiebedach-Sonnenschutzbaugruppe nach Anspruch 6, **dadurch gekennzeichnet, dass** das Zwischenelement (32) zwischen einem antriebselementfesten Anschlag (34) und dem Spriegel (20) angeordnet ist.

8. Schiebedach-Sonnenschutzbaugruppe nach einem der Ansprüche 1 bis 5, **dadurch gekennzeichnet, dass** das wenigstens eine elastische Zwischenelement (132) zwischen dem vorderen Ende (18) des Sonnenschutzelements (16) und dem Spriegel (120) angeordnet ist.

9. Schiebedach-Sonnenschutzbaugruppe nach Anspruch 8, **dadurch gekennzeichnet, dass** das vordere Ende (18) des Sonnenschutzelements (16), das Zwischenelement (132) und der Spriegel (120) im Wesentlichen linear aufeinanderfolgend angeordnet sind.

10. Schiebedach-Sonnenschutzbaugruppe nach Anspruch 8 oder 9, **dadurch gekennzeichnet, dass** das Sonnenschutzelement (16) ein im Wesentlichen starres Abschlusselement (140) am vorderen Ende (18) aufweist und sich das Abschlusselement (140) über die gesamte Breite des Sonnenschutzelements (16) erstreckt, wobei insbesondere das oder die Zwischenelement(e) (132) so angeordnet sind, dass eine über die Breite gleichmäßige Kraftbeaufschlagung des Abschlusselements (140) gegeben ist.

11. Schiebedach-Sonnenschutzbaugruppe nach Anspruch 10, **dadurch gekennzeichnet, dass** im Abschlusselement (140) wenigstens ein erstes Führungsteil (142) und im Spriegel (120) wenigstens ein damit zusammenwirkendes zweites Führungsteil (144) ausgebildet ist, wobei die Führungsteile (142, 144) gegeneinander verschiebbar sind.

12. Verfahren zum Verschieben eines Sonnenschutzelements einer Schiebedach-Sonnenschutzbaugruppe (10) für ein Fahrzeug, insbesondere nach einem der vorhergehenden Ansprüche, bei dem
ein freies vorderes Ende (18) des Sonnenschutzelements (16) in einer Schließposition an einem Anschlag (26) anliegt und
ein Antriebselement (22) zum Verfahren des Sonnenschutzelements (16) in die geschlossene Stellung durch einen Antrieb (24) in eine vorbestimmte Endstellung (Eᵥ) bewegt wird,
wobei die vorbestimmte Endstellung (Eᵥ) einer Position entspricht, in der ein im Kraftfluss zwischen dem vorderen Ende (18) des Sonnenschutzelements (16) und dem Antriebselement (22) angeordnetes elastisches Zwischenelement (32; 132) um einen Betrag (D) innerhalb eines vorbestimmten Toleranzwegs (T) komprimiert ist.

## Claims

1. A sliding roof sunshade assembly for a vehicle, comprising
a sunshade member (16) adapted to be displaced in an opening direction and a closing direction and including a bow (20; 120) in the region of its free front end (18);
at least one force-transmitting drive element (22) connected to the bow (20; 120) and to a drive (24) in order to displace the sunshade member (16) to a closed position, the front end (18) of the sunshade member (16) assuming a predetermined closure position in the closed position, **characterized in that**
at least one elastic intermediate member (32; 132) is provided which is arranged in the flow of force between the drive (24) and the front end (18) of the sunshade member (16),
and **in that** the drive (24) is designed such that after the front end (18) of the sunshade member (16) has reached the closure position, the drive (24) moves the drive element (22) further to a predetermined end position (Eᵥ) in which the intermediate member (32; 132) is elastically deformed.

2. The sliding roof sunshade assembly as claimed in claim 1, **characterized in that** when the sunshade member (16) is in an open position, the intermediate member (32; 132) is less tensioned than in the closure position.

3. The sliding roof sunshade assembly as claimed in either of the preceding claims, **characterized in that** a force applied by the drive (24) to the drive element (22) is greater than the spring force of the intermediate member (32; 132).

4. The sliding roof sunshade assembly as claimed in any of the preceding claims, **characterized in that** the drive element (22) is a tension-proof cable which is guided so as to be rigid in compression.

5. The sliding roof sunshade assembly as claimed in any of the preceding claims, **characterized in that** the sunshade member (16) is a flexible roller blind or a rigid sun panel.

6. The sliding roof sunshade assembly as claimed in any of the preceding claims, **characterized in that** the bow (20) is arranged for displacement in relation to the drive element.

7. The sliding roof sunshade assembly as claimed in claim 6, **characterized in that** the intermediate member (32) is arranged between a stop (34) fixed to the drive element and the bow (20).

8. The sliding roof sunshade assembly as claimed in any of claims 1 to 5, **characterized in that** the at least one elastic intermediate member (132) is arranged between the front end (18) of the sunshade member (16) and the bow (120).

9. The sliding roof sunshade assembly as claimed in claim 8, **characterized in that** the front end (18) of the sunshade member (16), the intermediate member (132), and the bow (120) are arranged substantially linearly in succession.

10. The sliding roof sunshade assembly as claimed in claim 8 or 9, **characterized in that** the sunshade member (16) includes a substantially rigid terminating member (140) at the front end (18), and the terminating member (140) extends over the entire width of the sunshade member (16), the intermediate member or members (132) more particularly being arranged such that a force applied to the terminating member (140) is uniform over the width.

11. The sliding roof sunshade assembly as claimed in claim 10, **characterized in that** at least one first guide part (142) is formed in the terminating member (140) and at least one second guide part (144) cooperating therewith is formed in the bow (120), the guide parts (142, 144) being adapted to be displaced relative to each other.

12. A method of displacing a sunshade member of a sliding roof sunshade assembly (10) for a vehicle, in particular as claimed in any of the preceding claims, in which
in a closure position, a free front end (18) of the sunshade member (16) rests against a stop (26), and
a drive element (22) for transferring the sunshade member (16) to the closed position is moved to a predetermined end position (Eᵥ) by a drive (24),
the predetermined end position (Eᵥ) corresponding to a position in which an elastic intermediate member (32; 132) which is arranged in the flow of force between the front end (18) of the sunshade member (16) and the drive element (22) is compressed by an amount (D) within a predetermined tolerance path (T).

## Revendications

1. Ensemble de protection solaire de toit ouvrant pour véhicule, comportant :
un élément de protection solaire (16) qui est déplaçable dans un sens d'ouverture et de fermeture et qui présente un arceau (20 ; 120) dans la zone de son extrémité avant libre (18),
au moins un élément d'entraînement (22) transmettant une force qui est relié à l'arceau (20 ; 120) et à un entraînement (24) pour déplacer l'élément de protection solaire (16) dans une position fermée, l'extrémité avant (18) de l'élément de protection solaire (16) prenant une position de fermeture prédéterminée dans la position fermée, **caractérisé en ce que**
il est prévu au moins un élément intermédiaire (32 ; 132) élastique qui est agencé dans le flux de force entre l'entraînement (24) et l'extrémité avant (18) de l'élément de protection solaire (16),
et **en ce que** l'entraînement (24) est réalisé de telle sorte que lorsque l'extrémité avant (18) de l'élément de protection solaire (16) a atteint la position de fermeture, il déplace l'élément d'entraînement (22) plus loin dans une position finale prédéterminée (Eᵥ), dans laquelle l'élément intermédiaire (32 ; 132) est élastiquement déformé.

2. Ensemble de protection solaire de toit ouvrant selon la revendication 1, **caractérisé en ce que** lorsque l'élément de protection solaire (16) se trouve dans une position ouverte, l'élément intermédiaire (32 ; 132) est moins tendu que dans la position de fermeture.

3. Ensemble de protection solaire de toit ouvrant selon l'une des revendications précédentes, **caractérisé en ce qu'**une force appliquée sur l'élément d'entraînement (22) par l'entraînement (24) est supérieure à la force élastique de l'élément intermédiaire (32 ; 132).

4. Ensemble de protection solaire de toit ouvrant selon l'une des revendications précédentes, **caractérisé en ce que** l'élément d'entraînement (22) est un câble guidé de manière à être résistant à la traction et rigide à la compression.

5. Ensemble de protection solaire de toit ouvrant selon l'une des revendications précédentes, **caractérisé en ce que** l'élément de protection solaire (16) est un store flexible ou un panneau de soleil rigide.

6. Ensemble de protection solaire de toit ouvrant selon l'une des revendications précédentes, **caractérisé en ce que** l'arceau (20) est agencé de manière à être mobile par rapport à l'élément d'entraînement.

7. Ensemble de protection solaire de toit ouvrant selon la revendication 6, **caractérisé en ce que** l'élément intermédiaire (32) est agencé entre une butée (34) fixée sur l'élément d'entraînement et l'arceau (20).

8. Ensemble de protection solaire de toit ouvrant selon l'une des revendications 1 à 5, **caractérisé en ce qu'**au moins un élément intermédiaire (132) élastique est agencé entre l'extrémité avant (18) de l'élément de protection solaire (16) et l'arceau (120).

9. Ensemble de protection solaire de toit ouvrant selon la revendication 8, **caractérisé en ce que** l'extrémité avant (18) de l'élément de protection solaire (16), l'élément intermédiaire (132) et l'arceau (120) sont agencés de manière sensiblement linéaire les uns après les autres.

10. Ensemble de protection solaire de toit ouvrant selon la revendication 8 ou 9, **caractérisé en ce que** l'élément de protection solaire (16) présente à l'extrémité avant (18) un élément d'arrêt (140) sensiblement rigide et **en ce que** l'élément d'arrêt (140) s'étend sur toute la largeur de l'élément de protection solaire (16), l'élément intermédiaire ou les éléments intermédiaires (132) étant en particulier agencé(s) de telle sorte qu'une force est appliquée de manière uniforme sur la largeur sur l'élément d'arrêt (140).

11. Ensemble de protection solaire de toit ouvrant selon revendication 10, **caractérisé en ce qu'**au moins une première pièce de guidage (142) est réalisée dans l'élément d'arrêt (140) et au moins une deuxième pièce de guidage (144) coopérant avec celle-ci est réalisée dans l'arceau (120), les pièces de guidage (142, 144) étant mobiles l'une par rapport à l'autre.

12. Procédé de déplacement d'un élément de protection solaire d'un ensemble (10) de protection solaire de toit ouvrant pour véhicule, en particulier selon l'une des revendications précédentes, dans lequel
une extrémité avant libre (18) de l'élément de protection solaire (16) repose sur une butée (26) dans une position de fermeture, et
un élément d'entraînement (22) pour le décalage de l'élément de protection solaire (16) dans la position fermée est déplacé dans une position finale (Eᵥ) prédéterminée par un entraînement (24),
la position finale (Eᵥ) prédéterminée correspondant à une position dans laquelle un élément intermédiaire (32 ; 132) élastique agencé dans le flux de force entre l'extrémité avant (18) de l'élément de protection solaire (16) et l'élément d'entraînement (22) est comprimé d'un montant (D) dans un trajet de tolérance (T) prédéterminé.
